# EUROPEAN PATENT SPECIFICATION

(11) **EP 1 625 913 B1**
(45) Date of publication and mention of the grant of the patent: **10.10.2007**
(21) Application number: 05103487.4
(22) Date of filing: 28.04.2005
(51) Int. Cl.: B23Q 11/08

(54) **Surface telescopic covers especially for machine tools**
Teleskopische Schutzabdeckung insbesondere für Werkzeugmaschinen
Couverture téléscopique particulièrement pour les machines-outils

(43) Date of publication of application: 15.02.2006
(73) Proprietor: Ceské vysoké uceni technické v Praze Fakulta strojni Vyzkumné centrum pro strojirenskou vyrobni techniku a technologii, 128 00 Praha 2 (CZ)
(72) Inventor: Kolár, Petr, 53831 Medlesice (CZ); Ondrácek, Miroslav, 51721 Týniste nad Orlicí (CZ); Housa, Jaromír, 19800 Praha 9 (CZ)
(74) Representative: Kratochvil, Vaclav

(56) References cited:
- DE-U1- 20 200 700
- DE-U1- 20 303 109
- US-A- 5 560 415
- US-A1- 2003 121 362

## Description

Technical solution is about surface telescopic covers with scissors mechanism first of all for machine tools and for forming machines, of the type disclosed in DE 20303109 U1.

### Background art

The surface telescopic covers or multi-plate covers are used for covering of two moving axes that create the surface. The most of this covers are applicable for low-dynamic moving axis with low maximal feed so they don't have forced segments moving. The moving of the particular cover elements is generate through hitting and pushing of all segments upon themselves. It causes the limit for maximum dynamic parameters and it does parasitic impulses into machine design.

The covering with forced segments moving through scissors mechanism takes off most advantages of described design. These mechanisms are usually made from thin metal plate jibs which aren't bend stiff. It isn't possible to use polyurethane wipers for sealing of plates. The soft bands from non-ferrous metals must be used but they cannot seal quality enough. The rotational joints in this scissors mechanism have slide bearing that has a clearance and limits the accuracy and dynamical parameters of all covers. The general design of whole covers has usually speed limit of 50 m/min and acceleration limit of 1g.

The multi-plate covers can realize the higher dynamical parameters. This solution isn't ideal too because the lamellae can good seal in same specific directions only and they are too noisy. The best reachable parameters with this design are speed 100 m/min and acceleration up to 2g. The life time of lamellae is limited by moving parameters.

### Disclosure of the invention

Surface telescopic covers for machine tools and for forming machines with scissors mechanism according this technical solution which is defined in claim 1 take off the above described problems. The scissors mechanism assembled from wide jigs connected with rotationally joints is the fundamental of new solution.

The rolling bearings are placed in joints in this solution. The scissor mechanism is placed with advantage in corners of covers. So the particular covers can have the flexible wipers, e.g. polyurethane wipers.

The axis journals make possible to set the position of particular covers in direction perpendicular to cover surface in this advantageous solution. The margins of covers are stiffed with advantage by thin-wall closed profiles. The particular jibs are assembled with advantage from several parts with a specific shape.

The new surface telescopic covers with forced segment moving according this technical solution take off all disadvantages of above described known technical solutions. The scissors mechanism assembled from wide jigs connected by rotationally joints is bend stiff himself and can bend stiffed the covers in direction perpendicular to cover surface. The rolling bearing placed in joints help to more fluent cover moving, set exactly the preload of sealing wipers, make possible to work with larger speed and the setting of scissor mechanism is more accurate.

The placing of scissor mechanism into the corners of covers has the fundamental advantage. Firstly, there is bigger mounting space for scissor mechanism. The minimum distance of central journals in compound state determinates the minimum distance between particular covers in compound state. The placing of scissor mechanism into the cover corners make this distance 1.4times smaller in comparison with version with scissor mechanism in the middle of the cover side. Secondly, if the cover is fixed in the corners, the better pressing force on wipers along cover side is done in comparison with version with scissor mechanism in the middle of the cover side which causes lower pressing force on wipers in the corners. The wipers decreased the risk of impurity intrusion behind the covers and minimized the pertinent leakage from work space. The wipers can decrease the general machine tool noise. The stiffness of wipers and the contradiction forces can be influenced by the choice of wipers material. The journals of central joints have the regulating thread which make possible to set the distance between particular covers.

The covers are made from thin metal plates. They can be stiffed by thin-wall closed profiles so the covers are enough stiff and can be larger than in other contemporary solutions.

The movement of particular cover segments is forced by the new designed scissor mechanism. The bending stiffness of scissor mechanism is realized by the sufficient width of jibs in the direction perpendicular to cover surface. So the scissor mechanism can ensure the defined size of the gap between the particular cover segments and the optimal preload force to wiper in all work conditions. The wipers preload force can be set through screw up of central joints axis journals into support frame of the plate. The design enables the good access to central joint journals and so the easy setting of wipers preload. All joints includes life greased ball bearing so the covers can reach the high dynamical parameters. This solution guarantees high accuracy, low passive resistance forces, long life and the possibility to realize the high angular acceleration. The particular jibs can be made like a monolith or can be mounted from some specific shape parts.

### Brief description of the drawings

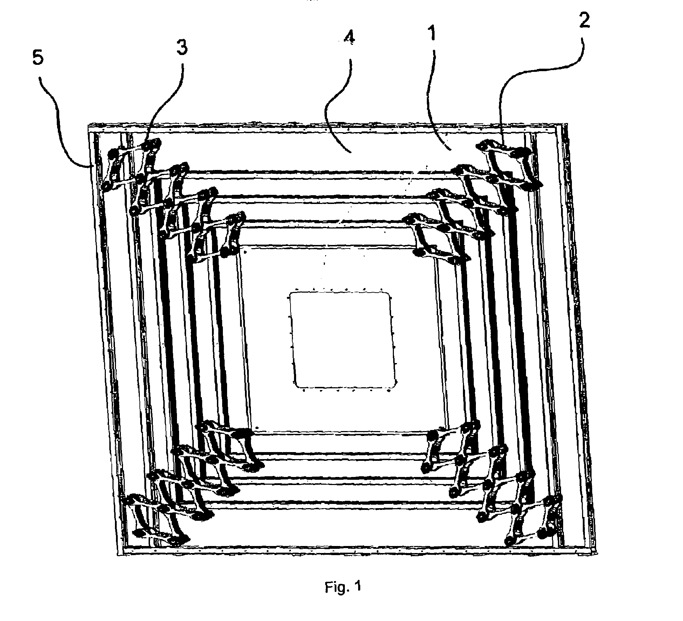

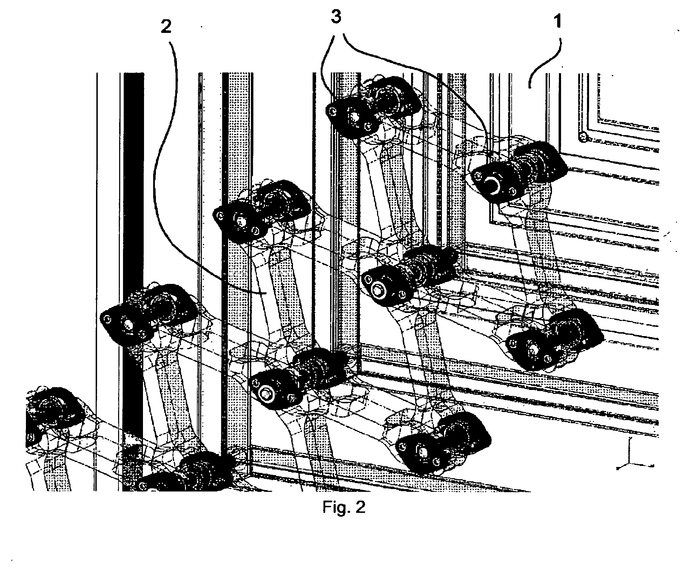

The specific example of technical solution is shown on the drawings. The fig. 1 schematically shows the axonometric view of the surface telescopic covers. The fig. 2 schematically shows the axonometric view of the scissor mechanism detail.

### Best mode for carrying out the invention

The exemplary surface telescopic covers for machine tools and for forming machines with the scissor mechanism 1 consist of plate covers 4 with joined scissor mechanism 1. The scissor mechanism 1 consists of wide jibs 2 connected by joints 3 together into the bend stiff mechanism. The joints 3 include the ball bearings. The scissor mechanism 1 is placed in the corners of covers 4. The particular covers 4 have wipers. The axis journals of central joints 3 have the setting threads for setting of the gap between the covers 4. The margins of covers 4 are stiffed with advantage by thin-wall closed profiles 5. The particular jibs 2 are mounted from several specific shape parts.

The above-described solution is used for covering of two axis of high dynamic cross table of horizontal milling centre. Technical parameters of covers are:

Maximum stroke in all axis: 660 mm

Maximum speed in all axes: 120 m/min

Maximum acceleration of all axis: 4g

Amount of the plates: 5

### Industrial applicability

The described telescopic covers with described technical solution can be used especially for covering of machine tools and forming machines.

## Claims

1. The surface telescopic covers for machine tools and forming machines with scissor mechanism, ***characterized by** that* the scissor mechanism (1) assembled with wide jibs (2) connected with joints (3) together into the bend stiff mechanism that strengthens the covers in direction perpendicular to cover plane and the joints (3) have rolling bearings, whereas the axis journals of central joints (3) have setting threads for setting the gap between the particular covers (4).

2. The surface telescopic covers of claim 1, ***characterized by** that* the scissor mechanism (1) is in the corners (4) of telescopic covers.

3. The surface telescopic covers of claims 1 or 2, ***characterized by** that* the particular covers (4) have wipers.

4. The surface telescopic covers according to any one of the preceding claims, ***characterized by** that* the margin of covers (4) are stiffened by thin-wall closed profiles (5).

5. The surface telescopic covers according to any one of the preceding claims, ***characterized by** that* the particular jibs (2) are mounted from several parts with a specific form.

## Patentansprüche

1. Teleskopische Scutzabdeckung insbesondere für Werkzeugmaschinen mit dem Scherensystem sind **dadurch gekennzeichnet, dass** das Scherensystem (1) mit breiten Auslegern (2) montiert und gelenkig (3) in einem biegungssteifen Mechanismus verbunden ist, das die Abdeckungen in der senkrechten Richtung zu der Abdeckungsebene verfestigt, und noch dazu sind die Gelenke (3) mit Rollenlagern versehen, während die Axiallager der Zentralgelenke mit der Gewindeeinstellung für die Festlegung des Abstandes zwischen den spezifischen Abdeckungen (4) ausgestattet sind.

2. Teleskopische Scutzabdeckung insbesondere für Werkzeugmaschinen nach Anspruch 1, **dadurch gekennzeichnet, dass** sich das Scherensystem (1) in den Winkeln (4) der teleskopischen Abdeckungen befindet.

3. Teleskopische Scutzabdeckung insbesondere für Werkzeugmaschinen nach Anspruch 1 oder 2, **dadurch gekennzeichnet, dass** die konkreten Abdeckungen (4) mit Wischern ausgestattet sind.

4. Teleskopische Scutzabdeckung insbesondere für Werkzeugmaschinen nach den durch einen der vorhengen Ansprüche, **dadurch gekennzeichnet, dass** die externen teleskopischen Abdeckungen (4) werden die Abdeckungskanten mit geschlossenen Leichtprofilen (5) abgestützt.

5. Teleskopische Scutzabdeckung insbesondere für Werkzeugmaschinen nach den durch einen der vorherigen Ansprüche, **dadurch gekennzeichnet, dass** die externen teleskopischen Abdeckungen werden die konkreten Ausleger (2) an verschiedenen Stellen mittels eines spezifischen Profils angebracht.

## Revendications

1. Couverture téléscopique particulièrement pour les machines-outils et pour les machines à façonner avec un élément d'assemblage de filetage, **se caractérisant par le fait que** l'élément d'assemblage de filetage (1) est assemblé de larges bras (2) fixés l'un à l'autre au moyen des articulations (3) en formant un assemblage rigide qui renforce les protecteurs au niveau vertical, étant donné que tes articulations (3) sont équipées de paliers à rouleaux tandis que les paliers de butée près des articulations centrales sont équipés d'une filière réglable pour fixer l'espace entre les différents protecteurs (4).

2. Couverture téléscopique particulièrement pour les machines-outils la revendication 1 **se caractérisant par le fait que** l'élément d'assemblage de filetage (1) se trouve dans le coude (4) des protecteurs téléscopiques.

3. Couverture téléscopique particulièrement pour les machines-outils la revendication 1 ou 2 **se caractérisant par le fait que** les différents protecteurs téléscopiques à plaques (4) sont équipés de racleurs.

4. Couverture téléscopique particulièrement pour les machines-outils l'une des revendications précédentes, **se caractérisant par le fait que** les bords de ces protecteurs (4) sont renforcés par les profilés isolés à paroi mince (5).

5. Couverture téléscopique particulièrement pour les machines-outils l'une des revendications précédentes, **se caractérisant par le fait que** les différets bras (2) sont assemblés de plusieurs parties au moyen d'un profilé spécial.
